# EUROPEAN PATENT SPECIFICATION

(11) **EP 4 601 808 B1**
(45) Date of publication and mention of the grant of the patent: **10.06.2026**
(21) Application number: 23787079.5
(22) Date of filing: 09.10.2023
(51) Int. Cl.: B05D 7/14, C09D 5/10, B05D 1/02, B05D 5/00

(54) **PROCESS FOR COATING A METAL SUBSTRATE**
VERFAHREN ZUR BESCHICHTUNG EINES METALLSUBSTRATS
PROCÉDÉ DE REVÊTEMENT DE SUBSTRAT MÉTALLIQUE

(30) Priority: 10.10.2022 NL 2033262
(43) Date of publication of application: 20.08.2025
(73) Proprietor: GMD Metal Coating B.V., 6931 EZ Westervoort (NL)
(72) Inventor: BODDE, Hendrik Johannes Dirk, 6666 MK Heteren (NL)
(74) Representative: De Vries & Metman
(86) International application number: PCT/EP2023/077876
(87) International publication number: WO 2024/079038

(56) References cited:
- EP-A1- 3 892 692
- WO-A1-2007/104121
- WO-A1-2020/091274
- WO-A1-97/32936
- CN-A- 108 192 403
- US-A- 5 338 348
- US-A- 5 792 803
- US-A1- 2015 210 863

## Description

The invention pertains to a process for coating a metal substrate. In particular, the invention pertains to a process for coating a metal substrate with a coating that improves the corrosion resistance of the substrate. The invention also pertains to a metal substrate provided with a coating.

Corrosion-resistant coatings for metal substrates are known in the art.

WO9732936 describes cathodic powder coating compositions including zinc powder and/or zinc flakes without microspheres and/or graphite with a minimum conductivity when applied of 3 ohm/cm².

US5338348 describes a coating composition for use in protecting metallic substrates from corrosion, comprising in weight percent, based on the total weight of the composition: from about 7% to 35% of film-forming substance; from about 35% to 55% of zinc powder; from about 5% to 25% of zinc flakes; from about 1% to 5% at least one kind of amorphous silica; and up to about 30% particulate ferrophosphate.

US5792803 describes a coating composition for use in protecting metallic substrates from corrosion, comprising in weight percent, based on the total weight of the composition; from about 10% to 20% of a film forming substance; from about 45% to 55% of zinc powder, from about 25% to 35% of zinc dust; from about 1.5% to 2.5% of hollow glass microspheres having diameters ranging from 1 to about 150 microns and a true density of 0.3 to 1.1; from about 2% to 15% by weight of the film forming substance, of a hardener, about 1% to 2% by weight of the film forming substance, of an amorphous silica; and about 0.3% to 1% of a flow control agent.

US2015210863 is directed to an anti-corrosive zinc primer coating composition comprising hollow glass spheres and a conductive pigment. In particular, it describes silicate-based coating compositions comprising particulate zinc, conductive pigments, and glass hollow microspheres.

EP3892692 describes a corrosion resistant coating composition comprising:(i) a binder;(ii) glass flakes;(iii) zinc flakes; and(iv) optionally zinc dust.

WO 2007/104121 A1 relates to a organopolysiloxane rubber composition comprising a sacrificial metal filler comprising 50 wt% of zinc flakes and 10 wt% of aluminium flakes together with petroleum naphtha as diluent.

CN 108 192 403 A discloses a similar coating and method employing a zinc-aluminium alloy powder.

WO 2020/091274 A1 relates to a multilayer coating system, wherein the first layer comprises zinc and aluminium particles, while the second and third layer comprise resin and catalyst wherein the first and second layer are dried and the third layer is applied thereafter.

However, there is still need for corrosion-resistant coatings for metal substrates. In particular, there is a need for a coating composition that produces a coating with good anti-corrosion properties, where at the same time the coating can be easily applied by spraying and cured under relatively mild conditions.

The invention provides a process for coating a substrate, comprising the steps of applying a layer of a coating composition to a substrate, and curing the coating composition, wherein
- the substrate is a metal substrate
- the coating composition comprises
   - metal particles with an average diameter in the range of 20-120 microns, in an amount of 50-95 wt.%, calculated on the total weight of the coating composition, wherein at least 50 wt.% of the metal particles are aluminium particles,
   - curable resin, in an amount of 5-50 wt.%, calculated on the total weight of the coating composition, wherein the curable resin is selected from the group of epoxy resins, acrylic resins, and polyester resins,
   - catalyst suitable for accelerating curing of the curable resin,
- the coating layer after curing having a total layer thickness of 50-2000 microns.

It has been found that if a metal substrate is coated with a composition as described above, a coating is obtained with excellent adhesion properties, wear properties, and anti-corrosion properties. The coating has a long service life and is relatively flexible. In addition, the coating gives an attractive appearance. The coating composition can be easily applied by spraying, painting or rolling, and can be cured under relatively mild conditions.

The invention and the advantages associated therewith are further explained below.

The coating composition comprises metal particles, wherein at least 50 wt.% of the metal particles are aluminium particles.

It is particularly preferred if of the total metal particles at least 70 wt.% are aluminium particles, in particular at least 80 wt.%, more particularly at least 90 wt.%. In one embodiment, all metal particles are aluminium particles. Aluminium has a lower density than zinc, giving the coating a lower weight for a defined thickness. Moreover, a coating with aluminium particles appears to be easier to spray in thick layers, up to, say, 500 microns without intermediate drying, and on vertical surfaces than a coating with zinc particles, without the coating running off or sagging. It also appears that the life of a coating with aluminium particles is longer than the life of a coating with zinc particles. A coating based on aluminium particles applied in one layer with a wet thickness of 500 microns and a thickness after drying of 450 microns has a theoretical lifetime of 60 years.

A further advantage of using aluminium particles is that the coating composition in the pot is less prone to sagging than when zinc particles are used. This means that the "pot-life" of the coating composition is longer. It has also been shown that a coating with aluminium particles has high flexibility. This means not only that the coating layer is more resistant to impact, bending, and denting, but also that it is possible to further process coated sheets, by bending and even rolling, without damaging the coating layer.

The metal particles have an average diameter in the range of 20-120 microns. The average diameter is the D50, that is, the value at which 50% of the particles have a larger diameter and 50% have a lower diameter. Particle size distribution is determined as is conventional in the field through laser diffraction. If the particles are too large, the homogeneity of the coating layer decreases, and thus the degree of coverage of the substrate. If the particle are too small, it is difficult to obtain a layer of sufficient thickness and homogeneity.

It is preferred if the metal particles have an average diameter in the range of 20 to 100 microns, more preferably 30 to 90 microns, even more preferably 40 to 80 microns. Suitable metal particles are commercially available.

Metal particles are present in the coating composition in an amount of 50-95 wt.%, calculated on the total weight of the coating composition before application to the substrate (i.e. before curing).

It is one of the advantages of the invention that the coating composition has a relatively high metal content, so the final coating layer contains a lot of metal. This contributes to the good corrosion-resistant results of the composition. It may therefore be preferable if the composition contains at least 60 wt.% metal, preferably at least 65 wt.%, sometimes even at least 70 wt.%. On the other hand, there must be enough space for the resin, catalyst, and any further components. Therefore, the amount of metal particles is at most 95 wt.%, and it may be desirable if the composition comprises at most 90 wt.% metal particles, or at most 85 wt.% metal particles.

The exact amount of metal particles also depends on the particle size of the metal particles, and further properties. In some cases, particularly if the metal is aluminium or if particles with an average particle size greater than 55 microns are used, it may be preferable if the composition contains 50-80 wt.% of metal particles, particularly 50-70 wt.%.

The composition contains a curable resin selected from the group of epoxy resins, acrylic resins, and polyester resins. Polyester resins are preferred. A heat-curable resin is preferred.

It is particularly preferred for the resin to be curable at a temperature of at most 100°C, in particular at most 60°C, more in particular at most 45°C, or at most 40°C. Suitable resin compositions are well known and need no further explanation. The presence of curable resins other than those mentioned is neither necessary nor desirable. Therefore, in one embodiment, the coating composition does not contain more than 10 wt.%, particularly not more than 5 wt.% of curable resins other than those specified above.

The resin is present in an amount of 5-50 wt.%, calculated on the amount of the coating composition. If less than 5 wt.% resin is present, insufficient binding is obtained. If more than 50 wt.% resin is present, there is insufficient space for the other components of the composition, especially for the metal particles. It is preferable if the resin is present in an amount of 5-40 wt.%, particularly 5-30 wt.%, even more particularly 5-25 wt.%, calculated as resin polymer to the total weight of the composition.

The composition also contains a catalyst. The catalyst is chosen to suit the curing mechanism of the resin. A catalyst for a heat-curable resin is preferred. Suitable catalysts are known and need no further explanation. The catalyst is applied in the usual amounts known in the field, generally in the range of 0.001 - 2 wt.%, calculated on the weight of the coating composition.

The coating composition may contain an organic diluent, for example in an amount of 2-40 wt.% calculated on the total coating composition. This is often desirable to give the composition good processing properties, particularly a sufficiently low viscosity. Application of less than 2 wt.% diluent usually does not achieve the effect of the diluent. Application of more than 40 wt.% of diluent detracts from the quantities of the other ingredients. It may be attractive to use at least 5 wt.% diluent, and/or at most 35 wt.%, more preferably at most 30 wt.%.

Suitable diluents include, for example, organic diluents such as alcohols with, for example, 2-10 carbon atoms, such as ethanol, propanol, butanol, and octanol. Other suitable diluents include alkyl esters and alkyl ethers, for example, ethyl acetate, ethyl acetate, methyl ethyl ketone, and methyl isobutyl ketone, and alkyl ethers of glycols. Aromatic hydrocarbons such as benzene, toluene and xylene can also be used, as well as mixtures of aromatic solvents derived from petroleum.

Preferably, the coating composition contains 5-40 wt.% of a diluent with a boiling point or decomposition point above 60°C, preferably above 80°C. Compared to low-boiling solvents such as ethanol, this has the advantage that the diluents remain in the composition for a long time, thus maintaining good workability. The ranges given above for the total amount of diluent also apply here.

One class of diluents that is particularly preferred are synthetic and natural oils. Suitable natural oils include vegetable oils such as cottonseed oil, peanut oil, coconut oil, cocoa butter, pumpkin seed oil, flaxseed oil, corn oil, olive oil, palm kernel oil, palm oil, rapeseed oil, sesame oil, soybean oil, sunflower oil, grapeseed oil, walnut oil, and wheat germ oil. Animal oils such as fish oil can also be used, as can oil from algae. Suitable oils also include petroleum products such as petroleum fractions, for example, with a boiling point in the range of 50-400°C, particularly 50-250°C. Suitable petroleum fractions include gasoline, diesel, and kerosene.

Application of vegetable oils is preferred because they are durable and provide good results. Application of peanut oil, flaxseed oil, corn oil, olive oil, palm oil, rapeseed oil, sunflower oil, sesame oil, or soybean oil is preferred.

Mixtures of different diluents and/or different oils can be used. It is preferable if the composition includes a total of 5-40 wt.% of synthetic oil and/or natural oil, especially a vegetable oil as indicated above. The ranges given above for the total amount of diluent also apply here.

It is also preferred that of the total amount of diluent in the composition at least 30 wt.% be a synthetic oil or natural oil, in particular a vegetable oil as indicated above, more preferably at least 50 wt.%, even more preferably at least 60 wt.%, or at least 70 wt.%, or at least 80 wt.%.

Because the metal content of the coating is important for the effect, and the inclusion of solid particles other than the metal particles may adversely affect the workability and effect of the composition, it is preferable that of the solid particles in the composition at least 80 wt.% consist of metal particles with an average diameter in the range of 20-120 microns, in particular at least 90 wt.%, even more particularly at least 95 wt.%, or at least 98 wt.%.

The use of glass particles in coating compositions has been described in the literature. For the composition according to the invention, their presence is neither necessary nor desirable. The presence of glass particles occupies volume taken up by metal particles in the coating composition according to the invention. It is therefore preferable if the composition comprises not more than 7 wt.%, preferably not more than 5 wt.%, more preferably not more than 2 wt.% in particular not more than 1 wt.% of glass particles.

In one embodiment the total of metal particles, resin, catalyst, and diluent forms at least 70 wt.%, in particular at least 80 wt.%, more particularly at least 90 wt.%, specifically at least 95 wt.% of the coating composition.

The substrate coated in the process according to the invention is a metal substrate, generally a steel substrate. Since the process according to the invention is particularly intended to provide corrosion resistance, the substrate will often be intended for outdoor applications, or applications in high humidity environments. Suitable substrates include industrial-scale substrates, for example chosen from the group of machinery and machine parts, metal structural parts for buildings, roads and other infrastructure including bridges, factories, wind turbines, and other off-shore and on-shore applications. The substrate may have been provided with a primer, but this is not required. In one embodiment, the coating composition is applied directly onto a metal substrate, without intermediate layers being present.

The coating composition can be applied in a conventional manner, such as by spraying, rolling, pouring, ironing, and dipping. Application by spraying is preferred because it is a fast and accurate way to apply a coating composition that produces even results. Airless spraying is particularly preferred because it is a known method of spraying large areas. It has been found that the composition according to the invention can be handled excellently by spraying, in particular airless spraying.

The coating composition may be applied in one or more layers, such as two, three, four, or five layers. In the present specification, a single layer is a layer that has been applied without intermediate curing. If the composition is applied in more layers, the composition must be at least partially cured in between. Depending on the curing mechanism, this can be done easily. It is a feature of the present invention that the coating composition can be applied to a relatively high total layer thickness without intermediate curing being required. This applies in particular to aluminium-based coatings.

After application of the composition, a curing step takes place. How this is done depends on the curing mechanism of the resin used. Curing with heat is preferred. In this case, it is preferable if the curing takes place at a temperature from 5-100°C, in particular 10-60°C, more particularly 15-45°C, for example 20-40°C. The time required depends on the chosen temperature (the lower the temperature, the more time is required). Curing time generally takes 1-48 hours, more specifically 2-36 hours, for example 4-30 hours. At lower temperatures, the curing time will be longer than at higher temperatures.

After curing, the composition has a total layer thickness of 50-2000 microns. This is the total of all applied layers. At layer thicknesses below 50 microns, the desired anti-corrosion effect is not achieved. Layer thicknesses above 2000 microns often provide no additional benefit. The total layer thickness is preferably at least 75 microns, more preferably at least 100 microns, particularly above 150 microns. The total layer thickness is preferably at most 1500 microns, more preferably at most 1200 microns. The coating thickness to be selected depends on the desired life of the coating layer. In some cases, a layer thickness of at most 1000 microns may be sufficient, or at most 800 microns, or at most 600 microns, or at most 400 microns. It is found that the coating layer according to the invention provides adequate protection even in relatively thin layers.

After application and curing, one or more post-processing steps may optionally be performed. Suitable finishing steps include sanding or polishing to obtain a surface with a metallic appearance. If desired, one or more further coating layers can be applied, but this is not necessary. A further coating layer will generally serve a decorative purpose, for example to provide a desired color. The coating layer obtained according to the invention is directly paintable.

The invention also relates to a metal substrate provided with a coating layer comprising metal particles and a resin, wherein layer is of a coating composition which comprises
- metal particles with an average diameter in the range of 20-120 microns, in an amount of 50-95 wt.%, calculated on the total weight of the coating composition, wherein at least 50 wt.% of the metal particles are aluminium particles,
- resin in an amount of 10-50 wt.% calculated on the total weight of the coating composition, the resin being selected from the group of epoxy resins, acrylic resins and polyester resins,
- catalyst suitable for accelerating resin curing,
and the coating composition has a total layer thickness of 50-2000 microns.

The preferences expressed above for the nature of the substrate, the coating composition, layer thicknesses and other features also apply to this embodiment of the present invention. Preferably, the layer of the coating composition has been cured.

It will be clear that preferences described for different aspects of the invention can be combined unless they are mutually exclusive.

The invention is illustrated by the following examples, without being limited thereto or thereby.

### Example 1: The compositions tested

### Coating A: coating composition comprising zinc particles - not according to the invention

A coating composition comprising zinc particles was prepared mixing zinc particles with a curable polyester resin and a diluent. The composition also contained a catalyst. The zinc particles had an average particle size of 45 microns. The coating composition contained 72 wt.% zinc particles. The diluent was a vegetable oil, and was applied in an amount of about 7 wt.%, calculated on the total coating composition. This coating composition is also indicated herein as a zinc coating.

### Coating B: coating composition comprising aluminium particles - according to the invention

A coating composition comprising aluminium particles was prepared by mixing aluminium particles with a curable polyester coating, and a diluent. The composition also contained a catalyst. The aluminium particles had an average particle size of 45 microns. The coating composition contained 55 wt.% aluminium particles. The diluent was a vegetable oil, and was applied in an amount of about 11 wt.%, calculated on the total coating composition. This coating composition is also indicated herein as an aluminium coating

### Example 2: Coating metal substrates, and properties of the coating

Steel panels were coated with the aluminium coating according to the invention and zinc coating not according to the invention from Example 1. The coating was applied via airless spraying. The coating was cured at a temperature of 20°C for about 24 hours.

For the zinc coating not according to the invention, the layer thickness after curing was about 500 microns. For the aluminium coating according to the invention, the layer thickness after curing was about 850 microns.

### Example 3: Testing of the coating obtained in Example 2

### Neutral salt spray test according to ISO 12944-6 C5H

A number of aluminium-coated according to the invention and zinc-coated not according to the invention samples were subjected to a neutral salt spray test according to ISO 12944-6 C5H. The test lasted approximately 1440 hours. The temperature was 35±2°C. The salt solution contained 5% NaCl. The pH of the salt solution was 6.5-7.2. The amount of liquid was 1-2 ml per 80 cm² per hour. For 100% zinc coatings, ISO 12944 equates the salt spray test to 15-20 years of exposure.

### Pull-off adhesion

Pull-off adhesion was determined for various samples before and after the salt spray test. The mean values are as follows:

| | Pull-off adhesion for the salt spray test (MPa) | Pull-off adhesion after salt spray test (MPa) |
|---|---|---|
| Coating A - zinc (not according to the invention) | 20 | 13 |
| Coating B - aluminium (according to the invention) | 13 | 15 |

A value of 5 MPa is sufficient to pass the test according to ISO 12944-6 C5H. This shows that both coatings have excellent pull-off adhesion both before and after the salt spray test.

### Wear test

The wear of the coating layers was investigated in accordance with ASTM D4060:2014 (Taber Abrasion), for 1000 cycles with a load of 1 kg and under application of a CS 17 wear wheel. The panels provided with zinc coating A not according to the invention showed a wear index of 0.10. The panels provided with aluminium coating B according to the inventionshowed a wear index of 0.16.

### Layer thickness

To examine the coating layer structure, cross sections were made. The layer thickness was measured. This was done both before and after the salt spray test. In both cases, the thickness was determined at six locations on the panel.

### Coating A: zinc coating not according to the invention

| Measurement | Thickness before salt spray test (microns) | Measurement | Thickness after salt spray test (micron) |
|---|---|---|---|
| 1 | 509 | 1 | 373 |
| 2 | 493 | 2 | 373 |
| 3 | 496 | 3 | 332 |
| 4 | 509 | 4 | 350 |
| 5 | 480 | 5 | 344 |
| 6 | 501 | 6 | 311 |
| Average | 498 | | 347 |

### Coating B: aluminium coating according to the invention

| Measurement | Thickness before salt spray test (microns) | Measurement | Thickness after salt spray test (micron) |
|---|---|---|---|
| 1 | 881 | 1 | 736 |
| 2 | 869 | 2 | 744 |
| 3 | 894 | 3 | 752 |
| 4 | 860 | 4 | 713 |
| 5 | 881 | 5 | 605 |
| 6 | 870 | 6 | 739 |
| Average | 876 | | 715 |

For both zinc coating A not according to the invention and aluminium coating B according to the invention, the thickness of the coating layer before the salt spray test was greater than the thickness after the salt spray test. For the zinc coating not according to the invention, the decrease in thickness was about 150 microns. ISO 12944 sets the salt spray test for 100% zinc coatings equivalent to 15-20 years of exposure. For exterior coatings in industrial areas with high humidity and aggressive atmosphere, for coastal areas with high salt concentration, and for interior coatings in areas with high condensation and high pollution a loss of 4.2-8.4 microns is allowed. A loss of 150 microns over a period of 20 years corresponds to 7.5 microns per year, and is thus a good result.

For the aluminium coating according to the invention, the decrease in thickness was about 160 microns. Again, this is a good result.

### Example 4: durability test - aluminium coating - 6 months

A sheet of carbon steel coated with primer was partially coated with a layer of a coating according to the invention as described as Coating B in Example 1, and cured under ambient conditions. The coating had a thickness after curing of about 150 micron. The coated sheet was exposed to weather conditions outside (Westervoort, the Netherlands) for 18 months. After 18 months, the corrosion rating was about the same as the plate just after coating application. Adhesion testing via an X-cut according to ASTM- D3359-09 (for coatings over 125 microns thick) yielded a rating of 4A. This example shows that the coating has excellent durability.

### Example 5: Adhesion to blasted panels

In general, metal substrates are blasted before coating to improve adhesion. It is preferable to apply the coating as soon as possible after blasting, generally within 6 hours. This is not always possible in practice. Therefore, the effect on coating adhesion of longer storage times of metal sheets after blasting and before coating was investigated.

Steel sheets were blasted according to ISO 8501-1 to SA 2.5. The panels were then stored outdoors, and after the time indicated in the table, a layer of a coating as described as Coating B according to the invention in Example 1 was applied, followed by drying under ambient conditions. The coating was applied with a roller. After drying, the adhesion was determined according to ISO 4624:2016. A value of 5 or higher is an acceptable result.

| | time | layer thickness (mean) (micron) | result (2 dollies) (MPa) |
|---|---|---|---|
| 1 | 24 hours | 110 | 13.23 / 16.04 |
| 2 | 1 week | 106 | 10.49 / 7.84 |
| 3 | 2 weeks | 116 | 7.41 / 8.65 |
| 4 | 3 weeks | 108 | 9.33 / 9.64 |
| 5 | 4 weeks | 131 | 9.55 / 10.52 |

The results of the test show that the coating according to the invention has good adhesion even if it is not applied to the metal sheet immediately after blasting. This increases flexibility in the application.

### Example 6: adhesion to other coating layers

The coating layer according to the invention may be provided with further coating layers, for example to achieve a desired color or surface properties. It is important that any further coating layers exhibit good adhesion to the coating of the invention. This adhesion has therefore been investigated for various commercially available coatings.

Steel pipes were coated after blasting to SA 2.5 by airless spraying with a coating composition as described as Coating B according to the invention in Example 1, with an average layer thickness of 174 microns, and then air-dried. This coating had an adhesion according to ISO 4624:2016 (2 dollies) of 10.71 MPa and 13.36 MPa.

Then, the pipes were coated with various commercial coating compounds by airless spraying. The following table shows the results of an adhesion test according to ISO 4624:2016.

| | coating | layer thickness (mean) (micron) | result (2 dollies) (MPa) |
|---|---|---|---|
| 1 | Sigmacover 456 | 384 | 8.10 / 7.86 |
| 2 | Intergard 475 S | 309 | 9.40 / 8.48 |
| 3 | Sigmacover 805 | 486 | 7.11 / 7.29 |
| 4 | Sigmadur 520 | 228 | 5.78 / 5.77 |

It appears that sufficient adhesion was found for all tested compositions.

### Example 7: Effect of rolling on coated sheets

Four steel plates of 1000 X 550 X 8 mm were coated after blasting with Coating B according to the invention from Example 1, with an average layer thickness after drying of 120 micron.

Two plates were first rolled over a drum 3 meters in diameter, then welded together. The other two plates were first welded together, and then rolled over a drum 3 meters in diameter. In both cases, bending by rolling did not result in damage to the coating. Welding resulted in damage to the coating directly under the weld. This damage was easily removed by sanding.

### Example 8: applying coating to a large object

Coating B according to the invention of Example 1 onto a section of a steel bridge. The bridge section had a total area to be coated of 88 m². The bridge section was coated on all sides (top, bottom, sides). Application was done by airless spraying, in two layers without intermediate drying. The final coating thickness was 150 microns. It was found that the coating according to the invention was easy to apply, even on large objects, vertical surfaces, and surfaces to be sprayed facing upwards. The coating layer was even and of good quality.

## Claims

1. Process for coating a substrate, comprising the steps of applying a layer of a coating composition to a substrate, and curing the coating composition, wherein
- the substrate is a metal substrate
- the coating composition comprises
- metal particles with an average diameter D50 as determined via laser diffraction in the range of 20-120 microns, in an amount of 50-95 wt.%, calculated on the total weight of the coating composition, wherein at least 50 wt.% of the metal particles are aluminium particles,
- curable resin, in an amount of 5-50 wt.%, calculated on the total weight of the coating composition, wherein the curable resin is selected from the group of epoxy resins, acrylic resins, and polyester resins,
- catalyst suitable for accelerating curing of the curable resin,
- the coating layer after curing having a total layer thickness of 50-2000 microns.

2. Process according to claim 1, wherein the curable resin is an acrylic resin or a polyester resin, in particular a polyester resin.

3. Process according to claim 1 or 2, wherein at least 70 wt.% of the metal particles are aluminium particles, in particular at least 80 wt.%, more particularly at least 90 wt.%.

4. Process according to any of the preceding claims, wherein the metal particles have an average diameter D50 as determined via laser diffraction in the range of 20 to 100 microns, preferably 30 to 90 microns, more preferably 40 to 80 microns.

5. Process according to any one of the preceding claims, wherein the coating composition comprises metal particles in an amount of 60-95 wt.%, calculated on the total weight of the coating composition, in particular 65-90 wt.%, more particularly 70-85 wt.%, or, in particular if the metal is aluminium or if particles with an average particle diameter D50 as determined via laser diffraction of more than 55 microns are used, 50-80 wt.% metal particles, in particular 50-70 wt.%.

6. Process according to any one of the preceding claims , wherein the coating composition comprises the metal particles in an amount of 50-80 wt.%, particularly 50-70 wt.%.

7. Process according to anyone of the preceding claims, wherein the resin is a heat-curable resin, in particular a resin curable at a temperature of at most 100°C, in particular at most 60°C, more in particular at most 45°C, or at most 40°C.

8. Processing process according to any of the preceding claims, wherein the resin is present in an amount of 5-40 wt.%, in particular 5-30 wt.%, even more particularly 5-25 wt.%, calculated as resin polymer on the total weight of the composition.

9. Process according to any of the preceding claims, wherein the coating composition comprises an organic diluent, for example, in an amount of 2-40 wt.%, preferably at least 5 wt.%, and/or at most 35 wt.%, more preferably at most 30 wt.%.

10. Process according to claim 9, wherein the diluent is selected from synthetic or natural oils, preferably vegetable oils and/or petroleum fractions, especially vegetable oils.

11. Process according to any of the preceding claims, wherein the substrate is a metal substrate intended for outdoor applications or applications in high humidity environments, wherein the substrate is chosen from the group of machinery and machine parts, metal structural parts for buildings, roads and other infrastructure including bridges, factories, windmills.

12. Process according to any of the preceding claims, wherein the coating composition is applied by spraying, rolling, pouring, ironing, dipping, in particular by spraying, more particularly by airless spraying, the total layer thickness preferably being at least 75 microns, preferably at least 100 microns, in particular more than 150 microns and/or at most 1500 microns, preferably at most 1200 microns, or at most 1000 microns, or at most 800 microns, or at most 600 microns, or at most 400 microns.

13. Process according to any of the preceding claims, wherein the coating composition is cured at a temperature of 5-100°C, in particular 10-60°C, more particularly 15-45°C, for example 20-40°C, for 1-48 hours, in particular 2-36 hours, for example 4-30 hours.

14. Metal substrate provided with a coating layer comprising metal particles and a resin, wherein layer is of a coating composition which comprises
- metal particles with an average diameter D50 as determined via laser diffraction in the range of 20-120 microns, in an amount of 50-95 wt.%, calculated on the total weight of the coating composition, wherein at least 50 wt.% of the metal particles are aluminium particles,
- resin in an amount of 10-50 wt.% calculated on the total weight of the coating composition, the resin being selected from the group of epoxy resins, acrylic resins and polyester resins,
- catalyst suitable for accelerating resin curing,
and the coating has a total layer thickness of 50-2000 microns, determined after curing.

## Patentansprüche

1. Verfahren zum Beschichten eines Substrats, umfassend die Schritte des Aufbringens einer Schicht einer Beschichtungszusammensetzung auf ein Substrat und des Aushärtens der Beschichtungszusammensetzung, wobei
- das Substrat ein Metallsubstrat ist;
- die Beschichtungszusammensetzung umfasst
- Metallpartikel mit einem mittleren Durchmesser D50, bestimmt mittels Laserdiffraktion, im Bereich von 20 bis 120 Mikrometer, in einer Menge von 50 bis 95 Gew.-%, berechnet auf das Gesamtgewicht der Beschichtungszusammensetzung, wobei mindestens 50 Gew.-% der Metallpartikel Aluminiumpartikel sind,
- härtbares Harz in einer Menge von 5 bis 50 Gew.-%, berechnet auf das Gesamtgewicht der Beschichtungszusammensetzung, wobei das härtbare Harz aus der Gruppe der Epoxidharze, Acrylharze und Polyesterharze ausgewählt ist,
- einen Katalysator, der zur Beschleunigung der Härtung des härtbaren Harzes geeignet ist,
- wobei die Beschichtungsschicht nach dem Aushärten eine Gesamtdicke von 50-2000 Mikrometern aufweist.

2. Verfahren nach Anspruch 1, wobei das härtbare Harz ein Acrylharz oder ein Polyesterharz ist, insbesondere ein Polyesterharz.

3. Verfahren nach Anspruch 1 oder 2, wobei mindestens 70 Gew.-% der Metallpartikel aus Aluminiumpartikeln bestehen, bevorzugt mindestens 80 Gew.-%, weiter bevorzugt mindestens 90 Gew.-%.

4. Verfahren nach einem der vorstehenden Ansprüche, wobei die Metallpartikel einen mittleren Durchmesser D50, bestimmt mittels Laserdiffraktion, im Bereich von 20 bis 100 Mikrometer, vorzugsweise 30 bis 90 Mikrometer, noch bevorzugter 40 bis 80 Mikrometer, aufweisen.

5. Verfahren nach einem der vorstehenden Ansprüche, wobei die Beschichtungszusammensetzung Metallpartikel in einer Menge von 60-95 Gew.-% umfasst, berechnet auf das Gesamtgewicht der Beschichtungszusammensetzung, bevorzugt 65-90 Gew.-%, weiter bevorzugt 70-85 Gew.-%, oder,
wenn das Metall Aluminium ist oder wenn Partikel mit einem mittels Laserdiffraktion bestimmten mittleren Partikeldurchmesser D50 von mehr als 55 Mikrometern verwendet werden, 50 bis 80 Gew.-% Metallpartikel, bevorzugt 50 bis 70 Gew.-%.

6. Verfahren nach einem der vorstehenden Ansprüche, wobei die Beschichtungszusammensetzung die Metallpartikel in einer Menge von 50 bis 80 Gew.-%, insbesondere 50 bis 70 Gew.-%, enthält.

7. Verfahren nach einem der vorstehenden Ansprüche, wobei das Harz ein wärmehärtbares Harz ist, insbesondere ein Harz, das bei einer Temperatur von höchstens 100 °C, vorzugsweise höchstens 60 °C, besonders bevorzugt höchstens 45 °C oder höchstens 40 °C härtbar ist.

8. Verfahren gemäß einem der vorstehenden Ansprüche, wobei das Harz in einer Menge von 5 bis 40 Gew.-%, vorzugsweise 5 bis 30 Gew.-%, weiter bevorzugt 5 bis 25 Gew.-%, bezogen auf das Gesamtgewicht der Zusammensetzung, als Harzpolymer vorliegt.

9. Verfahren nach einem der vorstehenden Ansprüche, wobei die Beschichtungszusammensetzung ein organisches Verdünnungsmittel enthält, beispielsweise in einer Menge von 2 bis 40 Gew.-%, vorzugsweise mindestens 5 Gew.-% und/oder höchstens 35 Gew.-%, noch bevorzugter höchstens 30 Gew.-%.

10. Verfahren nach Anspruch 9, wobei das Verdünnungsmittel aus synthetischen oder natürlichen Ölen, vorzugsweise Pflanzenölen und/oder Erdölfraktionen, insbesondere Pflanzenölen, ausgewählt ist.

11. Verfahren nach einem der vorstehenden Ansprüche, wobei das Substrat ein Metallsubstrat ist, das für Anwendungen im Außenbereich oder in Umgebungen mit hoher Luftfeuchtigkeit vorgesehen ist,
wobei das Substrat aus der Gruppe von Maschinen und Maschinenteilen, Metallbauteilen für Gebäude, Straßen und andere Infrastrukturen, einschließlich Brücken, Fabriken und Windkraftanlagen, ausgewählt ist.

12. Verfahren nach einem der vorstehenden Ansprüche, wobei die Beschichtungszusammensetzung durch Sprühen, Walzen, Gießen, Aufbügeln, Tauchen, vorzugsweise durch Sprühen, noch bevorzugter durch Airless-Sprühen, aufgebracht wird,
wobei die Gesamtschichtdicke vorzugsweise mindestens 75 Mikrometer, weiter bevorzugt mindestens 100 Mikrometer, insbesondere mehr als 150 Mikrometer, und/oder höchstens 1500 Mikrometer, vorzugsweise höchstens 1200 Mikrometer, weiter bevorzugt höchstens 1000 Mikrometer, noch weiter bevorzugt höchstens 800 Mikrometer, insbesondere bevorzugt höchstens 600 Mikrometer, oder ganz besonders bevorzugt höchstens 400 Mikrometer beträgt.

13. Verfahren nach einem der vorstehenden Ansprüche, wobei die Beschichtungszusammensetzung bei einer Temperatur von 5-100 °C, vorzugsweise 10-60 °C, weiter bevorzugt 15-45 °C, insbesondere bevorzugt 20-40 °C, für 1-48 Stunden, vorzugsweise 2-36 Stunden, insbesondere bevorzugt 4-30 Stunden, ausgehärtet wird.

14. Metallsubstrat, das mit einer Beschichtungsschicht versehen ist, die Metallpartikel und ein Harz umfasst, wobei die Schicht aus einer Beschichtungszusammensetzung besteht, die Folgendes umfasst:
- Metallpartikel mit einem mittleren Durchmesser D50, bestimmt mittels Laserdiffraktion, im Bereich von 20 bis 120 Mikrometer, in einer Menge von 50 bis 95 Gew.-%, berechnet auf das Gesamtgewicht der Beschichtungszusammensetzung, wobei mindestens 50 Gew.-% der Metallpartikel Aluminiumpartikel sind,
- Harz in einer Menge von 10-50 Gew.-%, berechnet auf das Gesamtgewicht der Beschichtungszusammensetzung, wobei das Harz aus der Gruppe der Epoxidharze, Acrylharze und Polyesterharze ausgewählt ist,
- einen Katalysator, der zur Beschleunigung der Harzhärtung geeignet ist,
und die Beschichtung eine Gesamtdicke von 50-2000 Mikrometern aufweist, bestimmt nach der Aushärtung.

## Revendications

1. Procédé de revêtement d'un substrat, comprenant les étapes consistant à appliquer une couche d'une composition de revêtement sur un substrat, et faire durcir la composition de revêtement, dans lequel
- le substrat est un substrat métallique
- la composition de revêtement comprend
- des particules métalliques avec un diamètre moyen D50 tel que déterminé via une diffraction laser dans la plage de 20 à 120 microns, en une quantité de 50 à 95 % en poids, calculée sur le poids total de la composition de revêtement, dans lequel au moins 50 % en poids des particules métalliques sont des particules d'aluminium,
- une résine durcissable, en une quantité de 5 à 50 % en poids, calculée sur le poids total de la composition de revêtement, dans lequel la résine durcissable est sélectionnée dans le groupe consistant en résines époxy, résines acryliques et résines polyester,
- un catalyseur approprié pour accélérer le durcissement de la résine durcissable,
- la couche de revêtement après durcissement ayant une épaisseur de couche totale de 50 à 2000 microns.

2. Procédé selon la revendication 1, dans lequel la résine durcissable est une résine acrylique ou une résine polyester, en particulier une résine polyester.

3. Procédé selon la revendication 1 ou 2, dans lequel au moins 70 % en poids des particules métalliques sont des particules d'aluminium, en particulier au moins 80 % en poids, plus particulièrement au moins 90 % en poids.

4. Procédé selon l'une quelconque des revendications précédentes, dans lequel les particules métalliques ont un diamètre moyen D50 tel que déterminé via une diffraction laser dans la plage de 20 à 100 microns, de préférence de 30 à 90 microns, de manière davantage préférée de 40 à 80 microns.

5. Procédé selon l'une quelconque des revendications précédentes, dans lequel la composition de revêtement comprend des particules métalliques en une quantité de 60 à 95 % en poids, calculée sur le poids total de la composition de revêtement, en particulier de 65 à 90 % en poids, plus particulièrement de 70 à 85 % en poids, ou, en particulier si le métal est de l'aluminium ou si des particules avec un diamètre de particules moyen D50 tel que déterminé via une diffraction laser de plus de 55 microns sont utilisées, de 50 à 80 % en poids de particules métalliques, en particulier de 50 à 70 % en poids.

6. Procédé selon l'une quelconque des revendications précédentes, dans lequel la composition de revêtement comprend les particules métalliques en une quantité de 50 à 80 % en poids, en particulier de 50 à 70 % en poids.

7. Procédé selon l'une quelconque des revendications précédentes, dans lequel la résine est une résine thermodurcissable, en particulier une résine durcissable à une température de 100 °C au maximum, en particulier de 60 °C au maximum, plus particulièrement de 45 °C au maximum, ou de 40 °C au maximum.

8. Procédé de traitement selon l'une quelconque des revendications précédentes, dans lequel la résine est présente en une quantité de 5 à 40 % en poids, en particulier de 5 à 30 % en poids, encore plus particulièrement de 5 à 25 % en poids, calculée en tant que polymère de résine sur le poids total de la composition.

9. Procédé selon l'une quelconque des revendications précédentes, dans lequel la composition de revêtement comprend un diluant organique, par exemple, en une quantité de 2 à 40 % en poids, de préférence d'au moins 5 % en poids, et/ou de 35 % en poids au maximum, de manière davantage préférée de 30 % en poids au maximum.

10. Procédé selon la revendication 9, dans lequel le diluant est sélectionné parmi des huiles synthétiques ou naturelles, de préférence des huiles végétales et/ou des fractions pétrolières, spécialement des huiles végétales.

11. Procédé selon l'une quelconque des revendications précédentes, dans lequel le substrat est un substrat métallique destiné à des applications extérieures ou à des applications dans des environnements à humidité élevée, dans lequel le substrat est choisi dans le groupe consistant en machineries et pièces de machines, pièces structurales métalliques pour les bâtiments, les routes et d'autres infrastructures, y compris les ponts, les usines, les éoliennes.

12. Procédé selon l'une quelconque des revendications précédentes, dans lequel la composition de revêtement est appliquée par pulvérisation, laminage, coulage, étirage, trempage, en particulier par pulvérisation, plus particulièrement par pulvérisation sans air, l'épaisseur de couche totale étant de préférence d'au moins 75 microns, de préférence d'au moins 100 microns, en particulier de plus de 150 microns et/ou de 1500 microns au maximum, de préférence de 1200 microns au maximum, ou de 1000 microns au maximum, ou de 800 microns au maximum, ou de 600 microns au maximum, ou de 400 microns au maximum.

13. Procédé selon l'une quelconque des revendications précédentes, dans lequel la composition de revêtement est durcie à une température de 5 à 100 °C, en particulier de 10 à 60 °C, plus particulièrement de 15 à 45 °C, par exemple de 20 à 40 °C, pendant 1 à 48 heures, en particulier 2 à 36 heures, par exemple 4 à 30 heures.

14. Substrat métallique doté d'une couche de revêtement comprenant des particules métalliques et une résine, dans lequel la couche est constituée d'une composition de revêtement qui comprend
- des particules métalliques avec un diamètre moyen D50 tel que déterminé via une diffraction laser dans la plage de 20 à 120 microns, en une quantité de 50 à 95 % en poids, calculée sur le poids total de la composition de revêtement, dans lequel au moins 50 % en poids des particules métalliques sont des particules d'aluminium,
- une résine en une quantité de 10 à 50 % en poids calculée sur le poids total de la composition de revêtement, la résine étant sélectionnée dans le groupe consistant en résines époxy, résines acryliques et résines polyester,
- un catalyseur approprié pour accélérer le durcissement de résine,
et le revêtement a une épaisseur de couche totale de 50 à 2000 microns, déterminée après durcissement.
